# EUROPÄISCHE PATENTSCHRIFT

(11) **EP 0 344 573 B1**
(45) Veröffentlichungstag und Bekanntmachung des Hinweises auf die Patenterteilung: **13.10.1993**
(21) Anmeldenummer: 89109214.0
(22) Anmeldetag: 23.05.1989
(51) Int. Cl.: B65G 1/127, B65G 1/133, G11B 23/023

(54) **Vorrichtung zum Lagern von Stückgut**
Storage device for articles
Dispositif de stockage d'articles

(30) Priorität: 02.06.1988 DE 3818781
(43) Veröffentlichungstag der Anmeldung: 06.12.1989
(73) Patentinhaber: Trapp, Hans-Jürgen, Dr.-Ing., 65779 Kelkheim (DE)
(72) Erfinder: Trapp, Hans-Jürgen Dr.-Ing., D-65779 Kelkheim (DE); Bürger, Reinhard, D-7302 Ostfildern 2 (DE)
(74) Vertreter: Patentanwälte Ruff, Beier, Schöndorf und Mütschele

(56) Entgegenhaltungen:
- US-A- 3 317 029
- US-A- 3 348 661
- US-A- 3 494 622

## Beschreibung

Die Erfindung betrifft eine Vorrichtung zum Lagern von Stückgut, insbesondere von Datenträger-Kassetten, nach dem Oberbegriff des Anspruchs 1.

Es ist bereits eine Vorrichtung zum Lagern von Gegenständen laut dem Oberbegriff bekannt (US-A-3 780 852), bei dem die Halterungen offene Kästen sind, die an Fahrgestellen befestigt sind. Die Fahrgestelle weisen zwei Rollen auf, mit denen sie in Schienen geführt sind. Dadurch beginnt die Drehbewegung der Fahrgestelle bei Erreichen der gekrümmten Abschnitte der Bahn bereits, bevor die Mitte des Fahrgestells den Übergang zum gebogenen Abschnitt erreicht.

Bei einer weiteren bekannten Speichervorrichtung (US-A-3 317 029) sind die Halterungen als in radialer Richtung geschlossene Kästen ausgebildet und starr mit Klammern verbunden, die mit zwei Zapfen in Gliedern einer Kette gelagert sind. Die Zapfen greifen in Längsschlitze in den Klammern ein. Die Drehbewegung beginnt vor Erreichen des gebogenen Abschnitts der Kette und endet nach dem Wiedererreichen des geradlinigen Abschnitts. Damit soll es möglich werden, die einzelnen Halterungen dicht nebeneinander anzuordnen.

Weiterhin bekannt ist eine Vorrichtung, zum Lagern von Akten (US-A-3 348 661), bei der einzelne Kästen mittels zweier Rollen in einer Führungsbahn bewegt werden. Aufgrund des Abstands der beiden Rollen beginnt die Schwenkbewegung am Übergang zwischen dem geradlinigen und dem gebogenen Teil der Bahn, bevor die Mitte des Kastens diesen Übergang erreicht.

Es ist bereits ein Magazin für Tonbandkassetten bekannt (DE-GM 78 15 098), bei dem die Halterungen an einem über zwei Umlenkwalzen geführten endlosen Förderband befestigt sind. Das Förderband kann dabei sowohl um horizontale als auch um vertikale Achsen geführt sein. Ein motorischer Antrieb ist erwähnt. Die Entnahme der Tonbandkassetten erfolgt in der Mitte der Stirnseite.

Bei der bekannten Vorrichtung sind die Halterungen, nämlich die Aufnahmetaschen, starr mit dem Förderband verbunden. Dies führt dazu, daß die Halterungen an der Übergangsstelle vom geraden zum gekrümmten Bandabschnitt in sehr kurzer Zeit von der Drehgeschwindigkeit Null auf eine endliche Drehgeschwindigkeit und umgekehrt beschleunigt werden müssen. Dieser stoßartige Beschleunigungsvorgang regt das System - insbesondere bei kleinem Umlenkradius - mit zunehmender Umlaufgeschwindigkeit immer heftiger an, so daß einerseits Lärm entsteht und das Lagergut schädlichen Schwingungen ausgesetzt ist, andererseits die wachsenden Beschleunigungskräfte zu vorzeitiger Zerstörung des Förderbandes und der Ankopplungselemente für die Halterungen führen.

Der Erfindung liegt die Aufgabe zugrunde, eine Vorrichtung zum Lagern von Stückgut-Einheiten, insbesondere Datenträger-Kassetten, zu schaffen, die bei möglichst guter Raumausnutzung eine hohe Zugriffsgeschwindigkeit erlaubt.

Zur Lösung dieser Aufgabe ist erfindungsgemäß eine Vorrichtung mit den Merkmalen des Anspruchs 1 vorgesehen. Nach den Maßnahmen der Erfindung wird dafür gesorgt, daß die Drehbewegung der Halterungen stoßfrei erfolgt, so daß sich die zulässige Geschwindigkeit erhöhen läßt. Dies ist um so wichtiger, als zur Erreichung einer besonders guten Raumausnutzung die Abstände zwischen den geradlinigen Abschnitten der Bewegungsbahn möglichst klein sein sollen.

Unter Bewegungsbahn ist im vorliegenden Fall diejenige geometrische Linie zu verstehen, längs der die Halterungen bewegt werden, wobei diese Bewegungsbahn auch durch eine Schienenbahn o.dgl. realisiert sein kann.

Um eine besonders günstige stoßfreie Einleitung der Drehbewegung zu erreichen, kann erfindungsgemäß in Weiterbildung vorgesehen sein, daß die Drehbewegung vor Erreichen des gebogenen Bahnabschnittes beginnt und beim Verlassen des gebogenen Bahnabschnittes endet. Dadurch steht für die Drehbeschleunigung eine größere Strecke und damit auch eine größere Zeit zur Verfügung, so daß die Drehbeschleunigungen insgesamt verkleinert werden können.

Der Antrieb der Halterungen bzw. Fahrgestelle kann von Ketten, Zahnrädern o.dgl. übernommen werden. Insbesondere günstig ist es, wenn die Fahrgestelle von einem längs der Bewegungsbahn bzw. der Führungsbahn geführten Antriebsriemen antreibbar sind. Dieser Antriebsriemen kann beispielsweise ein Zahnriemen sein, der über zwei Zahnräder geführt ist und auf diese Weise ein Oval bildet. Er kann mit Mitnehmern oder sonstigen Einrichtungen an den Fahrgestellen und/oder den Halterungen angreifen.

Lenkhebel kann beispielsweise an einer zweiten Führungsbahn geführt sein, die eine Zwangsdrehung der jeweiligen Halterung bzw. des zugehörigen Fahrgestelles bewirkt.

Insbesondere kann die Zwangssteuerung dadurch geschehen, daß am Ende jedes Schwenkhebels ein Ende einer drehbar an dem jeweils benachbarten Fahrgestell befestigten Schubstange angreift. Auf diese Weise wird eine Zwangssteuerung erreicht, die sich aufgrund der konstant bleibenden Abstände der einzelnen Fahrgestelle voneinander ergibt, ohne daß eine zusätzliche Führungsbahn für die Lenkhebel vorhanden zu sein braucht. Insbesondere kann dabei vorgesehen sein, daß die Lenkhebel bzgl. der Bewegungsbahn nach außen gerichtet sind.

Die Führungsbahn kann beispielsweise von einer Schiene gebildet werden, auf der die Fahrgestelle mittels Rollen geführt sind.

In Weiterbildung der Erfindung kann vorgesehen sein, daß an den Fahrgestellen senkrechte Stäbe oder Rohre drehbar befestigt sind, wobei die Halterungen an diesem Rohr bzw. Stab drehfest befestigt sind. Dann erfolgt die Zwangssteuerung der Halterungen durch die entsprechende Drehbewegung der Stäbe oder Rohre.

Um die exakte Führung der Halterungen auch dann zu gewährleisten, wenn beispielsweise die Stäbe sehr lang sind, kann in Weiterbildung der Erfindung vorgesehen sein, daß die Stäbe oder Rohre an beiden Enden mit Fahrgestellen verbunden sind, wobei das untere und obere Fahrgestell jeweils von einer Führungsbahn geführt ist.

Die von der Erfindung vorgeschlagene Vorrichtung ist nicht nur zum Lagern der Kassetten gedacht, sondern diese sollen auch von einer automatischen Greifeinrichtung herausgenommen werden können. Zu diesem Zweck sollten die Kassetten möglichst exakt gegenüber ihrer Halterung positioniert sein. Damit dennoch ein schnelles Einsetzen der Kassetten möglich ist, schlägt die Erfindung in Weiterbildung vor, daß die Halterungen für die Kassetten trichterartig ausgebildet sind. Dies bedeutet, daß ein Einsetzen der Kassetten nur mit einer relativ unpräzisen Positionierung durchgeführt zu werden braucht, da die Kassette dann anschließend in die Trichterform einrutscht und sich dort selbst positioniert. Die Trichterform ist natürlich an die Form der Kassetten angepaßt. So schlägt die Erfindung vor, daß für quaderförmige Kassetten die Halterung drei zueinander senkrecht angeordnete Anlage- bzw. Auflageflächen aufweisen kann, von denen jede Fläche schräg zur Vertikalen verläuft. Gleichgültig, an welcher der drei Flächen die Kassette beim Einsetzen zunächst anliegt, sie rutscht auf jeden Fall nach unten, bis sie an drei Flächen anliegt. Auf diese Weise ist die Kassette für ein anschließendes Entnehmen exakt positioniert.

In Weiterbildung kann vorgesehen sein, daß die Halterungen auf die Stäbe bzw. Rohre aufschiebbare Hülsenabschnitte aufweisen.

Damit beim Zusammensetzen der Vorrichtung die Halterungen untereinander und bzgl. der Vorrichtung exakt positioniert werden können, kann vorgesehen sein, daß die Hülsenabschnitte an ihrer Ober- und/oder Unterseite Ausricht-Einrichtungen zum Ausrichten gegenüber der jeweils benachbarten Halterung bzw. gegenüber dem Fahrgestell aufweisen. So kann z.B. das Fahrgestell einen Rastnocken o.dgl. aufweisen, und die Unterseite jedes Hülsenabschnittes in komplementärer Weise ausgeformt sein. Dadurch läßt sich die Halterung nur in der korrekten Stellung an dem Fahrgestell anbringen. Die Oberseite des Hülsenabschnittes ist entsprechend wiederum so ausgebildet wie das Fahrgestell, so daß die nächste Halterung exakt gegenüber der jeweils darunter liegenden Halterung angeordnet werden kann.

Zum Einsetzen und Entnehmen der Kassetten kann erfindungsgemäß vorgesehen sein, daß eine automatische Greifeinrichtung im Bereich eines Stirnendes der Bewegungsbahn angeordnet ist. Dies im Bereich der Stirnenden der Bewegungsbahn vorzunehmen hat den Vorteil, daß dort der gegenseitige Abstand der Kassetten in horizontaler Richtung größer ist als im Bereich der geradlinigen Abschnitte der Bewegungsbahn.

In Weiterbildung kann vorgesehen sein, daß mehrere Vorrichtungen derart nebeneinander angeordnet sind, daß ihre der Entnahme dienenden Stirnenden etwa auf einer Kreislinie liegen. Dies ist insbesondere dann von Vorteil, wenn die automatische Greifeinrichtung an einem festen Punkt steht und sich um eine feste Achse dreht. Dann ist der Abstand zu allen Vorrichtungen der gleiche. Dies vereinfacht die Steuerung der Greifeinrichtung.

Es können mehrere Halterungen übereinander angeordnet und durch Kleben, Schweißen, Verspannen o.dgl. miteinander verbunden sein. Sie können auch mit oder ohne gegenseitiger Verbindung auf einem Stab o.dgl. ausgeschoben sein. Ebenfalls mit Vorteil ist es möglich, mehrere Halterungen einstückig herzustellen und mit oder ohne Stab zu verwenden.

Weitere Merkmale, Einzelheiten und Vorzüge der Erfindung ergeben sich aus der folgenden Beschreibung einer bevorzugten Ausführungsform der Erfindung sowie anhand der Zeichnung. Hierbei zeigen:
- Fig. 1: schematisch eine Aufsicht auf eine von der Erfindung vorgeschlagene Vorrichtung;
- Fig. 2: schematisch die Seitenansicht der Anordnung der Fig. 1;
- Fig. 3: schematisch eine Möglichkeit einer Zwangssteuerung;
- Fig. 4: einen vertikalen Schnitt durch ein Fahrgestell;
- Fig. 5: eine Seitenansicht einer Halterung zur Aufnahme einer Kassette;
- Fig. 6: eine perspektivische Ansicht der Halterung der Fig. 5;
- Fig. 7: eine Ansicht der Halterung in Richtung des Pfeiles VII in Fig. 5;
- Fig. 8: rohrförmige Abschnitte zweier übereinander gesetzter Halterungen;
- Fig. 9: eine schematische Seitenansicht zweier Halterungen mit eingesetzten Kassetten.

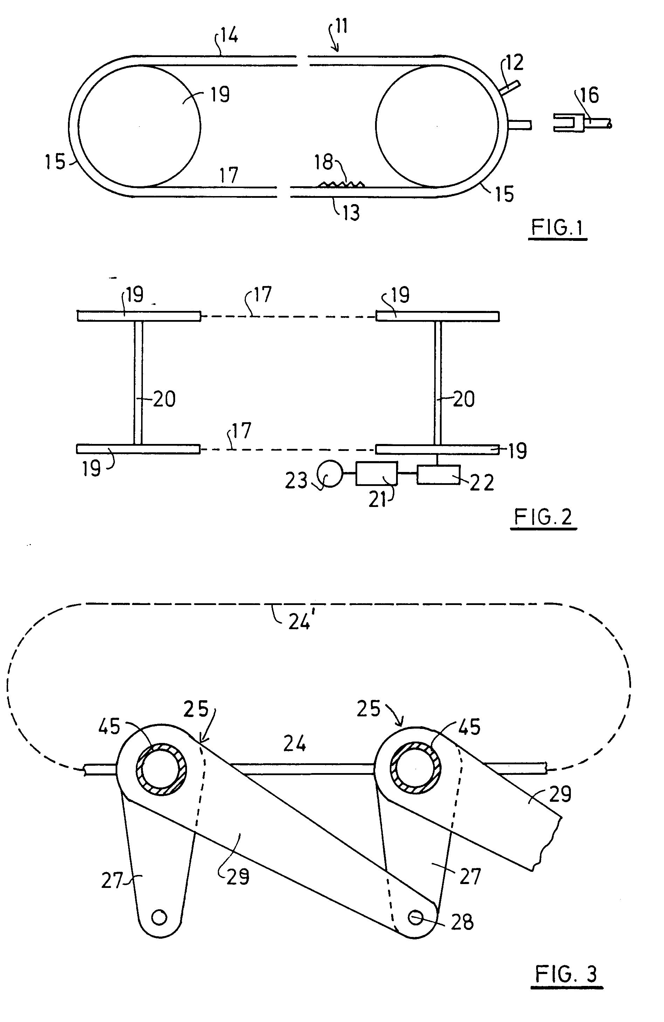

Fig. 1 zeigt stark schematisch, wie die Vorrichtung aufgebaut ist. Die Bewegungsbahn 11, längs der die zu lagernden Kassetten 12 bewegt werden, wird im dargestellten Beispiel von zwei geradlinigen Abschnitten 13, 14 und zwei diese geradlinigen Abschnitte 13, 14 miteinander verbindenden halbkreisförmigen Bögen 15 mit gleichem Radius gebildet. Die geradlinigen Abschnitte 13, 14 verlaufen parallel zueinander. Die Kassetten 12 sind derart bzgl. der Bewegungsbahn 11 gehaltert, daß sie nach außen zeigen, so daß sie von außen entnommen werden können. Zum Einsetzen und Entnehmen der Kassetten 12 ist eine automatisch betätigte Greifeinrichtung mit einer Zange 16 vorgesehen, die mit ihren beiden Zangenarmen an den Kassetten 12 angreifen und diese auf diese Weise entnehmen kann. Die Greifeinrichtung 16 ist im Bereich der Stirnseite der Bewegungsbahn 11 angeordnet und zwar vorzugsweise mittig zwischen der Verlängerung der beiden geradlinigen Abschnitte 13, 14. Wie sich aus der schematischen Fig. 1 ergibt, ist an dieser Stelle der gegenseitige Abstand der Kassetten 12 voneinander am größten, so daß die Zange 16 günstig zugreifen kann.

Im Ruhefall ist der Antrieb nicht in Betrieb und die Kassetten sind in Halterungen gehaltert. Sobald eine bestimmte Kassette benötigt oder eine Kassette in der Vorrichtung abgelegt werden soll, wird der Antrieb betätigt und die Halterungen so lange längs der Führungsbahn bewegt, bis die entsprechende Halterung an der Entnahmestelle angeordnet ist.

Damit die Kassetten längs der Führungsbahn 11 bewegt werden können, ist eine Antriebseinrichtung vorhanden, die einen parallel zur Bewegungsbahn 11 geführten Antriebsriemen 17 aufweist. Bei dem Antriebsriemen handelt es sich um einen Zahnriemen, dessen Verzahnung 18 auf der Innenseite der geschlossenen Bahn angeordnet ist. Der Antriebsriemen 17 ist um zwei gleich große Zahnscheiben 19 herumgeführt, die an ihrer Außenseite jeweils mit einer nicht dargestellten Verzahnung versehen sind. Die Kraftübertragung zwischen dem Antriebsriemen 17 und den Kassetten 12 ist in Fig. 1 nicht dargestellt. Dies ergibt sich aus einer späteren Figur.

Aus der Seitenansicht der Fig. 2 ist zu sehen, daß sowohl im Bereich der Ober- als auch im Bereich der Unterseite der Vorrichtung jeweils eine Zahnscheibe 19 vorgesehen ist. Jeweils ein Paar von übereinander angeordneten Zahnscheiben 19 ist durch eine Welle 20 miteinander verbunden. Eine derartige Welle 20 wird von einem Elektromotor 21 über ein Getriebe 22 angetrieben. Der Antriebsmotor 21 und/oder das Getriebe 22 sind mit einem Winkelcodierer 23 verbunden, der zwei um 90° phasenversetzte Markierungsbahnen trägt. Gegenüber den beiden Markierungsbahnen ist jeweils ein Lesegerät angeordnet, so daß eine Auswerteinrichtung nicht nur die durch den Antriebsmotor 21 bewirkte zurückgelegte Strecke, sondern auch die Richtung erkennen kann, in die die Bewegung erfolgt. Es ist daher mit Hilfe einer Auswerteinrichtung möglich, die exakte Stelle jeder Halterung für eine Kassette 12 zu einem bestimmten Zeitpunkt festzustellen. Sowohl die beiden oberen Zahnscheiben 19 als auch die beiden unteren Zahnscheiben 19 sind durch jeweils einen Antriebsriemen 17 miteinander verbunden. Aufgrund der Verzahnung 18 der Antriebsriemen 17 ist eine formschlüssige Verbindung gegeben, so daß tatsächlich die exakte Stellung jeder Halterung festgestellt werden kann. Die Zahnscheiben 19 auf der nicht direkt angetriebenen Seite brauchen nicht durch eine Welle 20 verbunden zu sein.

Bei Betrachtung der Fig. 1 ergibt sich ohne weiteres, daß eine Raumausnutzung, d.h. der von den Kassetten belegte Platz im Verhältnis zu dem gesamten Platzbedarf der Anlage dann besonders groß wird, wenn der Abstand der geradlinigen Abschnitte 13, 14 besonders klein oder anders ausgedrückt, der Durchmesser der Zahnscheiben 19 besonders klein ist. Je kleiner man aber den Durchmesser der Zahnscheiben bzw. den Abstand der geradlinigen Abschnitte 13, 14 macht, desto größer wird bei gegebener Geschwindigkeit der mit den Stäben 45 umlaufenden Halterungen und Kassetten die Drehgeschwindigkeit in den beiden gekrümmten Bahnabschnitten 15.

Im Übergangspunkt von geraden 11, 14, 17, 18 zu gekrümmten Bahnabschnitten 15 hat die Bahnkrümmung einen Sprung. Würde man die Stäbe so auf der Bahn führen, daß ihr Drehwinkel im Grundriß identisch mit dem Drehwinkel der Bahntangente ist, dann müßte in den Übergangspunkten die Drehgeschwindigkeit sich ebenfalls sprunghaft ändern, wobei die Höhe des Sprungs der Drehgeschwindigkeit umgekehrt proportional dem Bahndurchmesser wäre. Der Drehgeschwindigkeitssprung führt theoretisch zu unendlich großen Kräften, praktisch zu unkontrollierbaren Überbeanspruchungen. Um nun auch bei kleinem Durchmesser der Bewegungsbahn die Kräfte klein zu halten, schlägt die Erfindung eine Zwangssteuerung der Bewegung der Halterungen für die Kassetten vor, die zu einer Verringerung der Zentrifugalkräfte führt. Ein Beispiel für eine derartige Zwangssteuerung ist schematisch in Fig. 3 dargestellt. Fig. 3 zeigt einen geradlinigen Abschnitt einer Führungsbahn 24, wobei der weitere Verlauf der Führungsbahn 24 durch die gestrichelte Linie 24′ dargestellt ist. Auf der Führungsbahn bewegbar angeordnet sind Fahrgestelle 25 für die Halterungen für die Kassetten 12, wobei die Fig. 3 zwei benachbarte Fahrgestelle 25 zeigt. Mit jedem Fahrgestell 25 ist eine Stange 45 drehbar verbunden, wobei Halterungen für die Kassetten 12 drehfest mit den Stangen 45 verbunden sind. Diese Halterungen sind der Einfachheit halber in Fig. 3 nicht dargestellt, da es bei Fig. 3 nur um die Erklärung des Prinzips der Einleitung der Drehbewegung geht. Mit jeder Stange 45 ist ein schräg zur Führungsbahn 24 nach außen gerichteter Lenkhebel 29 verbunden. Eine Verdrehung des Lenkhebels 29 führt zu einer Verdrehung der Stange 45. Im Bereich der äußeren Enden der Lenkhebel 29 ist an diesen ein Zapfen 28 angeordnet. Dieser Zapfen 28 könnte beispielsweise in einer Schiene geführt sein, die eine Zwangsdrehung des Lenkhebels 29 und damit der Stange 45 bewirken würde. Bei der im Ausführungsbeispiel dargestellten Zwangsführung ist mit Hilfe des Zapfens 28 mit jedem Lenkhebel 29 eine Schubstange 27 verbunden, die an dem jeweils benachbarten Fahrgestell 25 bzw. der dortigen Stange 45 drehbar angelenkt ist. Gelangt nun beispielsweise bei einer Bewegung nach rechts in Fig. 3 das rechte Fahrgestell 25 in den Bereich der Krümmung, so zieht die Schubstange 27 den Lenkhebel 29 des folgenden Fahrgestells 25 und verdreht damit schon dessen Stange 45, bevor die Halterung in den gebogenen Abschnitt der Führungsbahn 24 gelangt. Das gleiche geschieht auch bei Bewegungen in umgekehrter Richtung.

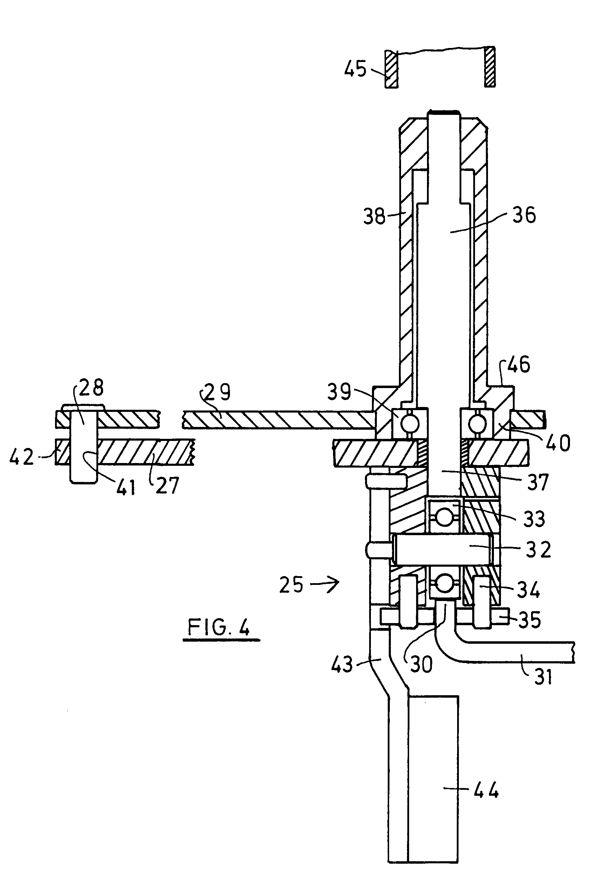

Fig. 4 zeigt eine mögliche Ausführung, wie die Art der Zwangssteuerung der Fig. 3 tatsächlich ausgeführt wird. Die Führungsbahn wird von dem nach oben gerichteten Rand 30 einer Wanne 31 gebildet. Auf diesem oberen Rand 30 ist das Fahrgestell 25 geführt. In dem Fahrgestell 25 ist eine um eine horizontale Welle 32 gelagerte Laufrolle 33 angeordnet, die auf dem oberen Rand 30 der Wanne 31 läuft. Zur seitlichen Führung sind insgesamt drei um senkrechte Wellen 34 laufende Führungsräder 35 vorhanden, von denen im Schnitt der Fig. 4 nur zwei zu sehen sind. Die drei Führungsräder 35 dienen der Führung des Fahrgestells, während die Laufrolle 33 das Gewicht trägt.

In dem Fahrgestell 25 ist ein senkrechter Zapfen 36 befestigt, um dessen unteren Abschnitt 37 schwenkbar die Schubstange 27 gelagert ist.

Auf den Zapfen 36 aufgesetzt ist eine Buchse 38, die in ihrem unteren Bereich gegenüber dem Zapfen 36 durch ein Kugellager 39 gelagert ist. In ihrem oberen Bereich stützt sich die Buchse 38 mit ihrer axialen Bohrung an dem Ende des Zapfens 36 ab. Die Buchse 38 ist also drehbar gegenüber dem Zapfen 36 und damit auch gegenüber dem Fahrgestell 25 angeordnet.

Mit dem unteren Rand 40 der drehbaren Buchse 38 ist der Lenkhebel 29 drehfest verbunden, beispielsweise durch eine stramme Einpassung. Eine Bewegung des Lenkhebels 29 führt daher zu einer Verdrehung der Buchse 38. Im äußeren Ende des Lenkhebels 29 ist der Zapfen 28 eingesetzt, der durch ein Loch 41 im Bereich des äußeren Endes 42 der Schubstange 27 des benachbarten Fahrgestells 25 hindurchgreift. Auf diese Weise führt die Bewegung des jeweils benachbarten Fahrgestells 25 zu der unter Bezugnahme auf Fig. 3 dargestellten Bewegung.

An der Außenseite des Fahrgestells 25 ist ein Mitnehmer 43 angeschraubt, an dessen unterem Bereich 44 ein an der Außenseite des Antriebsriemens 17 angeordneter Mitnehmer zur Bewegung des Fahrgestells 25 angreift.

Auf die Buchse 38 wird ein schematisch angedeutetes Rohr 45 aufgesetzt, das auf einer Schulter 46 der Buchse 38 anliegt und fest mit ihr verbunden ist. Mit dem Rohr 45 werden die im folgenden zu besprechenden Halterungen verbunden.

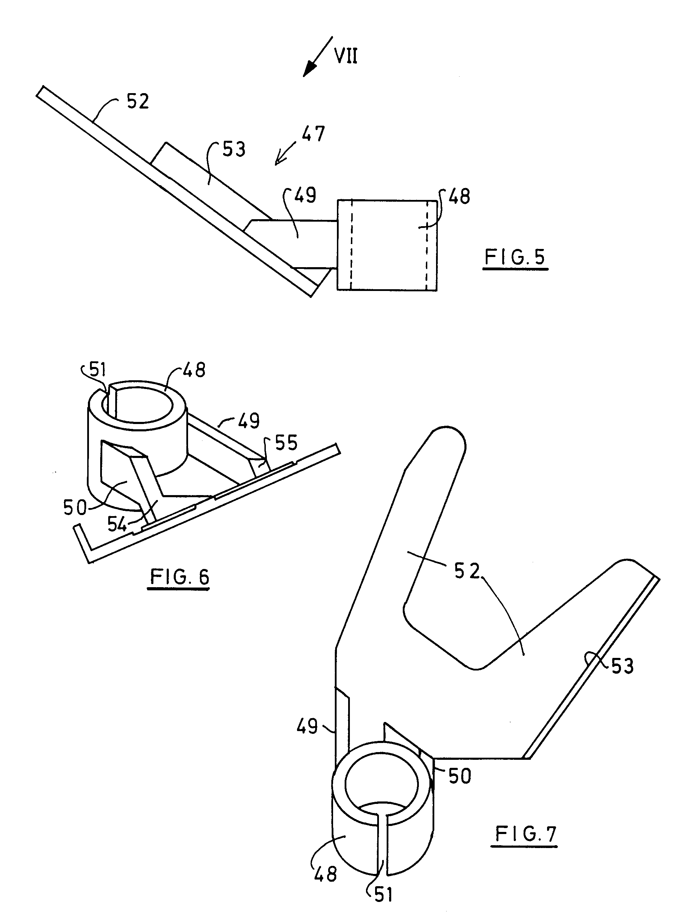

Fig. 5 zeigt eine Seitenansicht einer Halterung 47 für die in der Vorrichtung zu lagernden Kassetten 12. Die Halterung enthält einen rohrförmigen Abschnitt 48, der über zwei Arme 49, 50 mit den Anlageflächen verbunden ist. Der rohrförmige Abschnitt 48 weist einen Längsschlitz 51 auf, siehe Fig. 6 und 7, was sein Aufschieben auf das Rohr 45 erleichtert. Auf dem Rohr 45 läßt sich der Abschnitt beispielsweise mit Hilfe einer Rohrklemme oder einer ähnlichen Einrichtung verriegeln. Die Halterung weist eine gabelförmige Auflagefläche 52 für eine Breitseite der Kassette 12 auf. Wie sich aus Fig. 5 ergibt, verläuft diese Auflagefläche 52 schräg zur Vertikalen, die durch die Längsachse des rohrförmigen Abschnittes 48 gebildet ist. Senkrecht zu dieser Auflagefläche 52 ist eine Anlagefläche 53 vorgesehen, die einer Stirnkante der Kassette 12 entspricht und, wie sich aus Fig. 7 ergibt, ebenfalls schräg zu einer Vertikalen verläuft. Die dritte Fläche, an der die Kassetten anliegen, wird von der Oberseite 54 des Armes 50 und einer in der gleichen Ebene liegenden Schulter 55 des Armes 49 gebildet. Auch diese Fläche verläuft schräg gegenüber einer Vertikalen. Durch die drei senkrecht zueinander verlaufenden Flächen 52, 53, 54 wird eine Art Trichter gebildet, in die eine quaderförmige Kassette 12 einrutschen kann und an denen sie sich zentriert bzw. ausrichtet.

Die starke Neigung der Halterungen nach innen hat weiter zur Folge, daß die beträchtlichen Fliehkräfte im Bereich der gekrümmten Bahn - sie sind proportional zum Quadrat der Geschwindigkeit und umgekehrt proportional zum Durchmesser der Bahn - nicht zum Herausrutschen der Kassetten aus den Halterungen führen. Somit kann das Lager mit höherer Geschwindigkeit bewegt werden, als bei waagerechter oder schwach geneigter Anordnung der Halterungen.

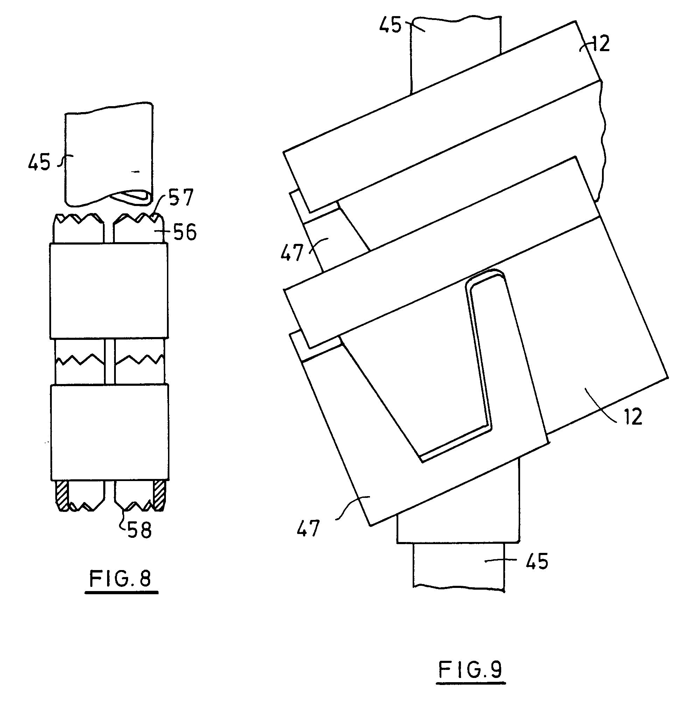

Fig. 8 zeigt, teilweise geschnitten, eine Vorderansicht der rohrförmigen Abschnitte von zwei übereinander angeordneten Halterungen bei einer anderen Ausführungsform. Die Oberseite 57 und die Unterseite 58 jedes rohrförmigen Abschnittes 56 ist gezahnt und komplementär zueinander ausgebildet, so daß sich die rohrförmigen Abschnitte nur in einer bestimmten übereinstimmenden Orientierung zueinander auf ein Rohr 45 aufschieben lassen. Eine entsprechende Ausbildung ist in diesem Fall am Fahrgestell bzw. der mit diesem verbundenen Buchse 38 vorgesehen. Auf diese Weise wird eine korrekte übereinstimmende Ausrichtung aller Halterungen an einem Rohr 45 gewährleistet, wie dies beispielsweise in Fig. 9 dargestellt ist. Hier sind zwei Halterungen 47 mit eingesetzten Kassetten 12 an einem Rohr 45 angeordnet. Die Breitseiten der Halterungen 12 weisen einen derartigen Abstand voneinander auf, daß die am vorderen Ende einer Greifeinrichtung angeordnete Zange 16 die Kassetten 12 ergreifen kann. Das Angreifen wird ebenfalls durch die gabelförmige Ausbildung der Auflagefläche 52 ermöglicht, da die Zange in den Zwischenraum zwischen den beiden Zinken der Gabel eingreifen kann.

Eine Vorrichtung zum Lagern von Datenträger-Kassetten enthält Fahrgestelle mit Halterungen, die längs einer sich aus zwei Halbkreisen und zwei diese verbindenden geradlinigen Abschnitten zusammensetzenden Führungsbahn bewegbar sind. Die Bewegung erfolgt in beiden Richtungen. Zur Ermöglichung einer guten Raumausnutzung und einer hohen Zugriffsgeschwindigkeit sind die Halterungen für die Kassetten derart zwangsgesteuert, daß die Einleitung der Drehbewegung für die Halterungen stoßfrei geschieht.

Weiter sind die Halterungen so steil gegen die Senkrechte geneigt, daß die Kassetten einerseits unter Eigengewicht sich an drei Wänden der Halterung zentrieren, andererseits die Hangabtriebskraft aus Eigengewicht so groß ist, daß sie die entgegenwirkende Komponente der Fliehkraft überwiegt und somit ein Herausrutschen der Kassette aus der Halterung vermieden wird.

## Patentansprüche

1. Vorrichtung zum Lagern von Stückgut, insbesondere von Datenträger-Kassetten (12), bei der eine Vielzahl von Halterungen (47) zur Aufnahme des Stückguts mindestens einseitig an Fahrgestellen (25) befestigt sind, die längs einer eine Bewegungsbahn (11) bildenden Führungsbahn (24) bewegbar sind, die aus Kreisbögen (15) und diese verbindenden geradlinigen Abschnitten (13, 14) aufgebaut ist, wobei die Halterungen (47) gegenüber der Bewegungsbahn (11) verdrehbar angeordnet und derart zwangsgesteuert sind, daß die Drehbewegung im Bereich des Übergangs von dem geradlinigen Abschnitt (13, 14) zu dem gebogenen Abschnitt (15) der Bewegungsbahn (11) stoßfrei eingeleitet und im Bereich des Übergangs von dem gebogenen Abschnitt (15) zu dem geradlinigen Abschnitt (13, 14) der Bewegungsbahn (11) stoßfrei beendet wird, dadurch gekennzeichnet, daß die Halterungen (47) um eine Senkrechte verdrehbar an den Fahrgestellen (25) befestigt sind und jede Halterung (47) einen drehfest mit ihr verbundenen Lenkhebel (29) aufweist, der die Drehstellung der Halterung (47) bewirkt.

2. Vorrichtung nach Anspruch 1, dadurch gekennzeichnet, daß die Fahrgestelle (25) von einem längs der Bewegungsbahn (11) bzw. der Führungsbahn (24) geführten Antriebsriemen (17) antreibbar sind.

3. Vorrichtung nach Anspruch 1 oder 2, dadurch gekennzeichnet, daß am Ende jedes Lenkhebels (29) das eine Ende (42) einer drehbar an dem jeweils benachbarten Fahrgestell (25) befestigten Schubstange (27) angreift.

4. Vorrichtung nach einem der vorhergehenden Ansprüche, dadurch gekennzeichnet, daß die Lenkhebel (29) zur Außenseite der Bewegungsbahn (11) gerichtet sind.

5. Vorrichtung nach einem der vorhergehenden Ansprüche, dadurch gekennzeichnet, daß die Drehbewegung vor Erreichen des gebogenen Bahnabschnitts (15) beginnt und beim Verlassen des gebogenen Bahnabschnitts (15) endet.

6. Vorrichtung nach einem der vorhergehenden Ansprüche, dadurch gekennzeichnet, daß die Führungsbahn (24) von einer Schiene gebildet wird, auf der die Fahrgestelle (25) mittels Rollen (33, 35) geführt werden.

7. Vorrichtung nach einem der vorhergehenden Ansprüche, dadurch gekennzeichnet, daß an den Fahrgestellen (25) senkrechte als Rohre (45) mit einem runden oder mehreckigen Querschnitt ausgebildete Stäbe drehbar befestigt sind und an jedem Stab mehrere Halterungen (47) angeordnet sind.

8. Vorrichtung nach einem der vorhergehenden Ansprüche, dadurch gekennzeichnet, daß zwei übereinander angeordnete Führungsbahnen (24) mit Fahrgestellen (25) vorhanden sind, die übereinander angeordneten Fahrgestelle (25) durch Stäbe miteinander verbunden sind, und der Antrieb durch je einen oberen und/oder unteren Antriebsriemen (17) erfolgt.

9. Vorrichtung nach einem der vorhergehenden Ansprüche, dadurch gekennzeichnet, daß die Halterungen (47) für das Stückgut trichterartig ausgebildet sind, derart, daß das Stückgut unter seinem Gewicht in eine zentrierte stabile Lage rutscht, wobei für quaderförmiges Stückgut die Halterung (47), insbesondere drei senkrecht zueinander angeordnete Anlageflächen (52, 53, 54) aufweist, von denen vorzugsweise jede Anlagefläche schräg zu einer Vertikalen verläuft.

10. Vorrichtung nach einem der vorhergehenden Ansprüche, dadurch gekennzeichnet, daß für jedes Stück Stückgut, insbesondere jede Kassette (12), eine Halterung (47) vorgesehen ist.

11. Vorrichtung nach einem der Ansprüche 7 bis 10, dadurch gekennzeichnet, daß die Halterungen (47) auf die Stäbe bzw. Rohre (45) aufschiebbare Rohrabschnitte (48) aufweisen, die vorzugsweise an ihren Oberseiten (57) und/oder Unterseiten (58) Ausricht-Einrichtungen zum Ausrichten gegenüber der jeweils benachbarten Halterung (47) bzw. dem Fahrgestell (25) aufweisen.

12. Vorrichtung nach einem der vorhergehenden Ansprüche, dadurch gekennzeichnet, daß zum Einlegen und Entnehmen des Stückguts eine automatische Greifeinrichtung im Bereich eines Stirnendes der Bewegungsbahn (11) angeordnet ist und bei mehreren Lagervorrichtungen diese derart nebeneinander angeordnet sind, daß ihre der Entnahme dienenden an den Stirnenden ungeordneten Stellen etwa auf einem Kreisbogen liegen und die Greifeinrichtung im Mittelpunkt des Kreisbogens angeordnet ist.

13. Vorrichtung nach einem der Ansprüche 9 bis 12, dadurch gekennzeichnet, daß die Neigung der Anlageflächen (52, 53, 54), die Bewegungsgeschwindigkeit der Halterungen für das Stückgut und die Zwangssteuerung der Drehbewegung derart aufeinander angestimmt sind, daß das Stückgut in seinen Halterungen bleibt.

14. Vorrichtung nach einem der vorhergehenden Ansprüche, dadurch gekennzeichnet, daß mehrere senkrecht übereinander angeordnete Halterungen, insbesondere durch Aufschieben auf einen Stab o.dgl. miteinander verbunden oder einstückig ausgebildet sind.

## Claims

1. Device for storing articles, particularly data carrier cassettes (12), in which a plurality of mounting supports (47) for receiving the article are fixed at at least one side to chassis (25), which are movable along a guideway (24) forming a movement path (11) and which is built up from circular arcs (15) and linear portions (13, 14) connecting the same, the mounting supports (47) being rotatably arranged with respect to the movement path (11) and forcibly guided in such a way that the rotary movement is initiated in shock-free manner in the vicinity of the transition from the linear portion (13, 14) to the curved portion (15) of the movement path (11) and is terminated in shock-free manner in the vicinity of the transition from the curved portion (15) to the linear portion (13, 14) of the movement path (11), characterized in that the mounting supports (47) are fixed in rotary manner about a vertical line to the chassis (25) and each mounting support (47) has a steering lever (29) connected in non-rotary manner thereto and which brings about the rotary position of the mounting support (47).

2. Device according to claim 1, characterized in that the chassis (25) are drivable by a driving belt (17) guided along the movement path (11), respectively the guideway (24).

3. Device according to claim 1 or 2, characterized in that at the end of each steering lever (29) acts one end (42) of a push rod (27) fixed in rotary manner to the in each case adjacent chassis (25).

4. Device according to one of the preceding claims, characterized in that the steering levers (29) are directed towards the outside of the movement path (11).

5. Device according to one of the preceding claims, characterized in that the rotary movement starts prior to reaching the curved path portion (15) and ends on leaving the curved path portion (15).

6. Device according to one of the preceding claims, characterized in that the guideway (24) is formed by a rail on which the chassis (25) are guided by means of rolls (33, 35).

7. Device according to one of the preceding claims, characterized in that to the chassis (25) are feed in rotary manner perpendicular rods constructed as pipes (45) with a round or polygonal cross-section and on each rod are provided several mounting supports (47).

8. Device according to one of the preceding claims, characterized in that two superimposed guideways (24) with chassis (25) are provided, the superimposed chassis (25) are interconnected by rods and the drive takes place by in each case an upper and/or lower driving belt (17).

9. Device according to one of the preceding claims, characterized in that the mounting supports (47) for the articles are constructed in funnel-like manner, in such a way that under its own weight the article slides into a centred, stable position and for parallelepipedic articles the mounting support (47) in particular has three perpendicularly arranged contact surfaces (52, 53, 54), whereof preferably each contact surface is inclined to the vertical.

10. Device according to one of the preceding claims, characterized in that for each article, in particular each cassette (12), one mounting support (47) is provided.

11. Device according to one of the claims 7 to 10, characterized in that the mounting supports (47) have pipe portions (48) which can be engaged on the rods or pipes (45) and which preferably have on their tops (57) and/or bottoms (58) aligning means for the alignment with respect to the adjacent mounting support (47), respectively chassis (25).

12. Device according to one of the preceding claims, characterized in that for inserting and removing the article an automatic gripper is positioned in the vicinity of one terminal end of the movement path (11) and in the case of several storage devices they are juxtaposed in such a way that their points arranged in approximate manner on the front ends and used for removal purposes are positioned roughly on a circular arc and the gripper is arranged in the centre of the arc.

13. Device according to one of the claims 9 to 12, characterized in that the slope of the contact surfaces (52, 53, 54), the movement speed of the mounting supports for the article and the forcible control of the rotary movement are matched to one another in such a way that the article remains in its mounting supports.

14. Device according to one of the preceding claims, characterized in that several perpendicularly superimposed mounting supports are interconnected, in particular by engaging on a rod or the like, or are constructed in one piece.

## Revendications

1. Dispositif pour stocker des articles, notamment des cassettes (12) contenant des données, dans lequel un grand nombre de brides de support (47) destinées à recevoir les articles sont fixées au moins d'un côté à des chariots (25) qui sont mobiles le long d'une glissière (24) formant une trajectoire (11), laquelle se compose d'arcs de cercle (15) et de tronçons rectilignes (13, 14) reliant ces derniers, les brides de support (47) étant disposées de manière à tourner par rapport à la trajectoire (11) et étant actionnées par commande forcée de manière à ce que le mouvement de rotation dans la zone de transition entre le tronçon rectiligne (13, 14) et le tronçon courbe (15) de la trajectoire (11) commence sans à-coup et se termine, dans la zone de transition entre le tronçon courbe (15) et le tronçon rectiligne (13, 14) de la trajectoire (11), également sans à-coup, caractérisé en ce que les brides de support (47) sont fixées aux chariots (25) de manière à pouvoir tourner autour d'une verticale, et en ce que chaque bride de support (47) présente un levier de commande (29) relié de manière solidaire en rotation à chacune d'elles, qui génère le mouvement de rotation de la bride de support (47).

2. Dispositif selon la revendication 1, caractérisé en ce que les chariots (25) peuvent être entraînés par une courroie d'entraînement (17) guidée le long de la trajectoire (11) ou de la glissière (24).

3. Dispositif selon la revendication 1 ou 2, caractérisé en ce que l'une des extrémités (42) d'une bielle (27) fixée de manière rotative au chariot (25) directement adjacent est reliée à l'extrémité de chaque levier de commande (29).

4. Dispositif selon l'une des revendications précédentes, caractérisé en ce que les leviers de commande (29) sont tournés vers l'extérieur de la trajectoire (11).

5. Dispositif selon l'une des revendications précédentes, caractérisé en ce que le mouvement de rotation commence avant que le tronçon courbé (15) de la trajectoire ne soit atteint et se termine à la sortie du tronçon courbé (15) de la trajectoire.

6. Dispositif selon l'une des revendication précédentes, caractérisé en ce que la glissière (24) est formée par un rail sur lequel les chariots (25) sont guidés au moyen de galets (33, 35).

7. Dispositif selon l'une des revendications précédentes, caractérisé en ce que des tiges verticales réalisées en tant que tubes (45) de section circulaire ou polygonale sont fixées aux chariots (25) de manière à pouvoir tourner, et en ce que sur chaque tige sont disposées plusieurs brides de support (47).

8. Dispositif selon l'une des revendications précédentes, caractérisé en ce qu'il y a deux glissières (24) disposées l'une au-dessus de l'autre et munies de chariots (25), en ce que les chariots (25) disposés l'un au-dessus de l'autre sont reliés entre eux par des tiges, et en ce que l'entraînement est chaque fois assuré par une courroie d'entraînement (17) supérieure et/ou inférieure.

9. Dispositif selon l'une des revendications précédentes, caractérisé en ce que les brides de support (47) pour les articles sont réalisées en forme d'entonnoir de manière à ce que les articles glissent sous leur poids dans une position centrée stable, sachant que pour des articles carrés, la bride de support (47) présente notamment trois surfaces de contact (52, 53, 54) disposées perpendiculairement l'une à l'autre, chacune d'entre elles, de préférence, s'étendant en biais par rapport à la verticale.

10. Dispositif selon l'une des revendications précédentes, caractérisé en ce qu'une bride de support (47) est prévue pour chaque article, notamment pour chaque cassette (12).

11. Dispositif selon l'une des revendications 7 à 10, caractérisé en ce que les brides de support (47) présentent des portions de tube (48) pouvant être enfilées sur les tiges ou tubes (45), qui présentent sur le dessus (57) et/ou sur le dessous (58) des dispositifs d'alignement pour les aligner par rapport à la bride de support (47) adjacente ou par rapport au chariot (25).

12. Dispositif selon l'une des revendications précédentes, caractérisé en ce que pour introduire et retirer les articles, un dispositif automatique de préhension est disposé à une extrémité frontale de la trajectoire (11) et en ce que, lorsqu'il y a plusieurs dispositifs de stockage, ceux-ci sont disposés côte à côte de telle manière que les endroits servant à retirer les cassettes qui sont placés de manière aléatoire sur les côtés d'extrémité soient rangés approximativement sur un arc de cercle et que le dispositif de préhension soit disposé au centre de l'arc de cercle.

13. Dispositif selon l'une des revendications 9 à 12, caractérisé en ce que l'inclinaison des surfaces de contact (52, 53, 54), la vitesse de déplacement des brides de support pour les articles et la commande forcée du mouvement de rotation sont coordonnées de telle manière que les articles restent dans leurs brides de support.

14. Dispositif selon l'une des revendications précédentes, caractérisé en ce que plusieurs brides de support disposées verticalement les unes au-dessus des autres sont reliées entre elles notamment en les enfilant sur une tige ou analogue ou sont re'alisées d'un seul tenant.
